# EUROPEAN PATENT APPLICATION

(11) **EP 1 408 435 A1**
(43) Date of publication of application: **14.04.2004**
(21) Application number: 02722800.6
(22) Date of filing: 25.04.2002
(51) Int. Cl.: G06F 17/60

(54) **ELECTRONIC CURRENCY TRANSFER SETTLING SYSTEM**

(30) Priority: 27.04.2001 JP 2001131446
(71) Applicant: MATSUSHITA ELECTRIC INDUSTRIAL CO., LTD., Kadoma-shi, Osaka 571-0050 (JP)
(72) Inventor: TODA, Toshiyuki, Yokohama-shi, Kanagawa 226-0017 (JP)
(74) Representative: Rackham, Stephen Neil
(86) International application number: PCT/JP2002/004169
(87) International publication number: WO 2002/091265

(57) **Abstract**

In an electronic currency transmitting/receiving settling system, a purchased amount-of-money limiting means (7) for limiting an amount of the electronic currency, which is purchased by the electronic currency purchasing means (6), under an upper limit amount being set previously, an electronic currency storing means (8) for storing the electronic currency purchased by the electronic currency purchasing means (6), and a settling system communicating means (10) for executing a paying process of the electronic currency by a necessary amount out of the electronic currency, which is stored in the electronic currency storing means (8), via a communication with a price settling system (9) that pays the electronic currency are provided to a main body of an electronic currency transmitting/receiving terminal system (1). According to this configuration, the user authenticating step generated in every price paying process using the electronic currency can be omitted, and also pecuniary damage of the user can be reduced when the person except the user executes the price paying process illegally.

## Description

### <Technical Field>

The present invention relates to an electronic currency transmitting/receiving terminal system for executing the acceptance of an electronic currency from an electronic currency server and the transmission of the electronic currency at the time of price settlement, an electronic currency transmitting/receiving method, an electronic currency transmitting/receiving program and a recording medium for the same, a price settling system for executing the price settlement by the electronic currency, a price settling method, a price settling program and a recording medium for the same, and an electronic currency transmitting/receiving settling system.

### <Background Art>

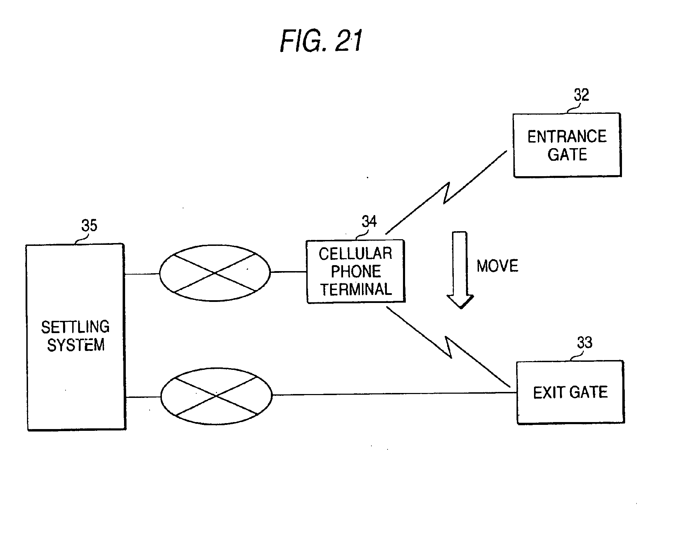

In the prior art, as the mobile electronic commerce system having the wallet software that is used via the radio communicating means in answer to the installation of the electronic ticket, the electronic prepaid card, the electronic telephone card, or the like into the electronic commerce service providing means, such system set forth in W0099/09502 gazette is known. Also, as shown in FIG.21, as the cellular-phone utilizing fare settling system having the cellular phone terminal 34, which receives the station identification number from the entrance gate 32, then transmits the station identification number and the terminal identification number to the exit gate 33, and then receives an amount of the fare from the exit gate 33, and the settling system 35 which executes the settlement process with respect to the cellular phone terminal 34, such system set forth in JP-A-2000-20767 is known.

However, in these systems in the prior art, there are problems such that the user's authenticating step that is generated in every paying process executed by the user using the electronic currency is required, and the person except the owner of the terminal device can get such terminal device to execute the paying process illegally.

### <Disclosure of the Invention>

The present invention has been made to overcome the problems in the prior art, and it is an object of the present invention to provide an electronic currency transmitting/ receiving terminal system, an electronic currency transmitting/receiving method, an electronic currency transmitting/receiving program and a recording medium for the same, a price settling system, a price settling method, a price settling program and a recording medium for the same, and an electronic currency transmitting/receiving settling system, which can achieve advantages such that the terminal- user authenticating step, which is generated in every paying process using the electronic currency, can be omitted by providing a purchased amount-of-money limiting means that limits a purchased amount of electronic currency under an upper limit amount of money that is set previously, and also the pecuniary damage of the user can be reduced when the person except the terminal owner executes the paying process illegally.

An electronic currency transmitting/receiving terminal system of the present invention, comprises a public network communicating means for executing a communication with an electronic currency server that issues an electronic currency; an electronic currency purchase authenticating means for executing an authenticating process of an electronic currency purchaser to the electronic currency server via the public network communicating means; an electronic currency purchasing means for purchasing the electronic currency of the purchaser, who is authenticated by the electronic currency purchase authenticating means, from the electronic currency server via the public network communicating means; a purchased amount-of-money limiting means for limiting an amount of the electronic currency, which is purchased by the electronic currency purchasing means, under a previously-set upper limit amount; an electronic currency storing means for storing the electronic currency purchased by the electronic currency purchasing means; and a settling system communicating means for executing a paying process by using the electronic currency, which is stored in the electronic currency storing means, via the communication with a system that pays the electronic currency.

According to this configuration, the user authenticating step that is generated in every price paying process using the electronic currency can be omitted, and also the pecuniary damage of the user can be reduced when the person except the user executes the price payment illegally.
Also, an electronic currency transmitting/receiving method of the present invention, comprises a public network communicating step of executing a communication with an electronic currency server that issues an electronic currency; an electronic currency purchase authenticating step of executing an authenticating process of an electronic currency purchaser to the electronic currency server via the public network communicating step; an electronic currency purchasing step of purchasing the electronic currency of the purchaser, who is authenticated by the electronic currency purchase authenticating step, from the electronic currency server via the public network communicating step; a purchased amount-of-money limiting step of limiting an amount of the electronic currency, which is purchased by the electronic currency purchasing step, under a previously-set upper limit amount; an electronic currency storing step of storing the electronic currency purchased by the electronic currency purchasing step; and a settling system communicating step of executing a paying process by using the electronic currency, which is stored in the electronic currency storing step, via the communication with a system that pays the electronic currency.

According to this configuration, the user authenticating step that is generated in every price paying process using the electronic currency can be omitted, and also the pecuniary damage of the user can be reduced when the person except the user executes the price payment illegally.
Also, an electronic currency transmitting/receiving program of the present invention for causing a computer to execute, a public network communicating step of executing a communication with an electronic currency server that issues an electronic currency; an electronic currency purchase authenticating step of executing an authenticating process of an electronic currency purchaser to the electronic currency server via the public network communicating step; an electronic currency purchasing step of purchasing the electronic currency of the purchaser, who is authenticated by the electronic currency purchase authenticating step, from the electronic currency server via the public network communicating step; a purchased amount-of-money limiting step of limiting an amount of the electronic currency, which is purchased by the electronic currency purchasing step, under a previously-set upper limit amount; an electronic currency storing step of storing the electronic currency purchased by the electronic currency purchasing step; and a settling system communicating step of executing a paying process by using the electronic currency, which is stored in the electronic currency storing step, via the communication with a system that pays the electronic currency.

According to this configuration, the user authenticating step that is generated in every price paying process using the electronic currency can be omitted, and also the pecuniary damage of the user can be reduced when the person except the user executes the price payment illegally.
Also, an electronic currency transmitting/receiving program recording medium of the present invention for recording a program that causes a computer to execute, a public network communicating step of executing a communication with an electronic currency server that issues an electronic currency; an electronic currency purchase authenticating step of executing an authenticating process of an electronic currency purchaser to the electronic currency server via the public network communicating step; an electronic currency purchasing step of purchasing the electronic currency of the purchaser, who is authenticated by the electronic currency purchase authenticating step, from the electronic currency server via the public network communicating step; a purchased amount-of-money limiting step of limiting an amount of the electronic currency, which is purchased by the electronic currency purchasing step, under a previously-set upper limit amount; an electronic currency storing step of storing the electronic currency purchased by the electronic currency purchasing step; and a settling system communicating step of executing a paying process by using the electronic currency, which is stored in the electronic currency storing step, via the communication with a system that pays the electronic currency.

According to this configuration, the user authenticating step that is generated in every price paying process using the electronic currency can be omitted, and also the pecuniary damage of the user can be reduced when the person except the user executes the price payment illegally.

Also, a price settling system of the present invention, comprises a terminal communicating means for executing a communication with a settling system communicating means; a terminal identification information displaying means for receiving identification information, which is held in the electronic currency transmitting/receiving terminal system and transmitted from the settling system communicating means, and displaying at least a part of the identification information; a payment requesting means for causing the terminal communicating means to transmit an amount-of-money information of the electronic currency required for settlement to the settling system communicating means; and an electronic currency accepting means for accepting the electronic currency transmitted from the electronic currency transmitting/receiving terminal system via the terminal communicating means.

According to this configuration, when a plurality of electronic currency transmitting/receiving terminal systems that must pay the price are present closely, the user of the terminal can check which terminal the communication with is being established by displaying such terminal, and also wrong execution of the price settlement can be prevented.

Also, a price settling method of the present invention, comprises a terminal communicating step of executing a communication with a settling system communicating step; a terminal identification information displaying step of receiving identification information, which is held in the electronic currency transmitting/receiving terminal system and transmitted by the settling system communicating step, and displaying at least a part of the identification information; a payment requesting step of causing the terminal communicating step to transmit an amount-of-money information of the electronic currency required for settlement to the settling system communicating step; and an electronic currency accepting step of accepting the electronic currency transmitted from the electronic currency transmitting/ receiving terminal system via the terminal communicating step.

According to this configuration, when a plurality of electronic currency transmitting/receiving terminal systems that must pay the price are present closely, the user of the terminal can check which terminal the communication with is being established by displaying such terminal, and also wrong execution of the price settlement can be prevented.
Also, a price settling program of the present invention for causing a computer to execute, a terminal communicating step of executing a communication with a settling system communicating step; a terminal identification information displaying step of receiving identification information, which is held in the electronic currency transmitting/ receiving terminal system and transmitted by the settling system communicating step, and displaying at least a part of the identification information; a payment requesting step of causing the terminal communicating step to transmit an amount-of-money information of the electronic currency required for settlement to the settling system communicating step; and an electronic currency accepting step of accepting the electronic currency transmitted from the electronic currency transmitting/receiving terminal system via the terminal communicating step.

According to this configuration, when a plurality of electronic currency transmitting/receiving terminal systems that must pay the price are present closely, the user of the terminal can check which terminal the communication with is being established by displaying such terminal, and also wrong execution of the price settlement can be prevented.

Also, a price settling program recording medium of the present invention for recording a program that causes a computer to execute, a terminal communicating step of executing a communication with a settling system communicating step; a terminal identification information displaying step of receiving identification information, which is held in the electronic currency transmitting/ receiving terminal system and transmitted by the settling system communicating step, and displaying at least a part of the identification information; a payment requesting step of causing the terminal communicating step to transmit an amount-of-money information of the electronic currency required for settlement to the settling system communicating step; and an electronic currency accepting step of accepting the electronic currency transmitted from the electronic currency transmitting/receiving terminal system via the terminal communicating step.

According to this configuration, when a plurality of electronic currency transmitting/receiving terminal-systems that must pay the price are present closely, the user of the terminal can check which terminal the communication with is being established by displaying such terminal, and also wrong execution of the price settlement can be prevented.

Also, an electronic currency transmitting/receiving terminal system of the present invention further comprises a terminal name assigning/holding means for permitting a user to set the identification information, which is transmitted to a system that pays the electronic currency, of the electronic currency transmitting/receiving terminal system.

According to this configuration, the identification information can be changed in response to the intention of the user. For example, when the telephone number is used as the identification information, such a situation can be prevented that the telephone number is displayed and then is looked furtively by another person.

Also, an electronic currency transmitting/receiving method of the present invention further comprises a terminal name assigning/holding step of permitting a user to set the identification information, which is transmitted to a system that pays the electronic currency, of the electronic currency transmitting/receiving terminal system.

According to this configuration, the identification information can be changed in response to' the intention of the user. For example, when the telephone number is used as the identification information, such a situation can be prevented that the telephone number is displayed and then is looked furtively by another person.

Also, an electronic currency transmitting/receiving program of the present invention, for causing the computer to further execute a terminal name assigning/holding step of permitting a user to set the identification information, which is transmitted to a system that pays the electronic currency, of the electronic currency transmitting/ receiving terminal system.

According to this configuration, the identification information can be changed in response to the intention of the user. For example, when the telephone number is used as the identification information, such a situation can be prevented that the telephone number is displayed and then is looked furtively by another person.

Also, an electronic currency transmitting/receiving program recording medium of the present invention, for recording the program that causes the computer to further execute a terminal name assigning/holding step of permitting a user to set the identification information, which is transmitted to a system that pays the electronic currency, of the electronic currency transmitting/ receiving terminal system.

According to this configuration, the identification information can be changed in response to the intention of the user. For example, when the telephone number is used as the identification information, such a situation can be prevented that the telephone number is displayed and then is looked furtively by another person.

Also, an electronic currency transmitting/receiving terminal system of the present invention, comprises a public network communicating means for executing a communication with an electronic currency server that issues an electronic currency; an electronic currency purchase authenticating means for executing an authenticating process of an electronic currency purchaser to the electronic currency server via the public network communicating means; an electronic currency purchasing means for purchasing the electronic currency of the purchaser, who is authenticated by the electronic currency purchase authenticating means, from the electronic currency server via the public network communicating means; a settled amount-of-money accumulating means for accumulating/storing an amount of the electronic currency that is paid by a settling process; an electronic currency storing means for storing the electronic currency that is purchased by the electronic currency purchasing means; a settling system communicating means for executing a paying process by using the electronic currency stored in the electronic currency storing means via the communication with a system that pays the electronic currency; a settlement authenticating means for executing an authenticating process of the user and then causing the settling system communicating means to execute an electronic currency paying process when an authentication succeeded; and a payment-authentication requirement deciding means for comparing an upper limit amount of a previously-set payable amount with an amount of money stored in the settled amount-of-money accumulating means, and then executing the authenticating process by the settlement authenticating means and then executing a paying process of the electronic currency by the settling system communicating means when an accumulated amount of the paid amount of money exceeds the upper limit amount, while executing the paying process of the electronic currency by the settling system communicating means without the authenticating process by the settlement authenticating means when the accumulated amount of the paid amount of money does not exceed the upper limit amount.

According to this configuration, although a limit is not imposed on an amount of the electronic currency that is purchased and accumulated in the terminal, the user authenticating step that is generated in every price paying process using the electronic currency can be omitted up to a certain amount of money, and also the pecuniary damage of the user can be reduced when the person except the user executes the price payment illegally.

Also, an electronic currency transmitting/receiving method of the present invention, comprises a public network communicating step of executing a communication with an electronic currency server that issues an electronic currency; an electronic currency purchase authenticating step of executing an authenticating process of an electronic currency purchaser to the electronic currency server via the public network communicating step; an electronic currency purchasing step of purchasing the electronic currency of the purchaser, who is authenticated by the electronic currency purchase authenticating step, from the electronic currency server via the public network communicating step; a settled amount-of-money accumulating step of accumulating/storing an amount of the electronic currency that is paid by a settling process; an electronic currency storing step of storing the electronic currency that is purchased by the electronic currency purchasing step; a settling system communicating step of executing a paying process by using the electronic currency stored by the electronic currency storing step via the communication with a system that pays the electronic currency; a settlement authenticating step of executing an authenticating process of the user and then causing the settling system communicating step to execute an electronic currency paying process when an authentication succeeded; and a payment-authentication requirement deciding step of comparing an upper limit amount of a previously-set payable amount with an amount of money stored by the settled amount-of-money accumulating step, and then executing the authenticating process by the settlement authenticating step and then executing a paying process of the electronic currency by the settling system communicating step when an accumulated amount of the paid amount of money exceeds the upper limit amount, while executing the paying process of the electronic currency by the settling system communicating step without the authenticating process by the settlement authenticating step when the accumulated amount of the paid amount of money does not exceed the upper limit amount.

According to this configuration, although a limit is not imposed on an amount of the electronic currency that is purchased and accumulated in the terminal, the user authenticating step that is generated in every price paying process using the electronic currency can be omitted up to a certain amount of money, and also the pecuniary damage of the user can be reduced when the person except the user executes the price payment illegally.

Also, an electronic currency transmitting/receiving program of the present invention for causing a computer to execute a public network communicating step of executing a communication with an electronic currency server that issues an electronic currency; an electronic currency purchase authenticating step of executing an authenticating process of an electronic currency purchaser to the electronic currency server via the public network communicating step; an electronic currency purchasing step of purchasing the electronic currency of the purchaser, who is authenticated by the electronic currency purchase authenticating step, from the electronic currency server via the public network communicating step; a settled amount-of-money accumulating step of accumulating/ storing an amount of the electronic currency that is paid by a settling process; an electronic currency storing step of storing the electronic currency that is purchased by the electronic currency purchasing step; a settling system communicating step of executing a paying process by using the electronic currency stored in the electronic currency storing step via the communication with a system that pays the electronic currency; a settlement authenticating step of executing an authenticating process of the user and then causing the settling system communicating step to execute an electronic currency paying process when an authentication succeeded; and a payment-authentication requirement deciding step of comparing an upper limit amount of a previously-set payable amount with an amount of money stored in the settled amount-of-money accumulating means, and then executing the authenticating process by the settlement authenticating step and then executing a paying process of the electronic currency by the settling system communicating step when an accumulated amount of the paid amount of money exceeds the upper limit amount, while executing the paying process of the electronic currency by the settling system communicating step without the authenticating process by the settlement authenticating step when the accumulated amount of the paid amount of money does not exceed the upper limit amount.

According to this configuration, although a limit is not imposed on an amount of the electronic currency that is purchased and accumulated in the terminal, the user authenticating step that is generated in every price paying process using the electronic currency can be omitted up to a certain amount of money, and also the pecuniary damage of the user can be reduced when the person except the user executes the price payment illegally.

Also, an electronic currency transmitting/receiving program recording medium of the present invention for recording a program that causes a computer to execute a public network communicating step of executing a communication with an electronic currency server that issues an electronic currency; an electronic currency purchase authenticating step of executing an authenticating process of an electronic currency purchaser to the electronic currency server via the public network communicating step; an electronic currency purchasing step of purchasing the electronic currency of the purchaser, who is authenticated by the electronic currency purchase authenticating step, from the electronic currency server via the public network communicating step; a settled amount-of-money accumulating step of accumulating/storing an amount of the electronic currency that is paid by a settling process; an electronic currency storing step of storing the electronic currency that is purchased by the electronic currency purchasing step; a settling system communicating step of executing a paying process by using the electronic currency stored in the electronic currency storing step via the communication with a system that pays the electronic currency; a settlement authenticating step of executing an authenticating process of the user and then causing the settling system communicating step to execute an electronic currency paying process when an authentication succeeded; and a payment-authentication requirement deciding step of comparing an upper limit amount of a previously-set payable amount with an amount of money stored in the settled amount-of-money accumulating means, and then executing the authenticating process by the settlement authenticating step and then executing a paying process of the electronic currency by the settling system communicating step when an accumulated amount of the paid amount of money exceeds the upper limit amount, while executing the paying process of the electronic currency by the settling system communicating step without the authenticating process by the settlement authenticating step when the accumulated amount of the paid amount of money does not exceed the upper limit amount.

According to this configuration, although a limit is not imposed on an amount of the electronic currency that is purchased and accumulated in the terminal, the user authenticating step that is generated in every price paying process using the electronic currency can be omitted up to a certain amount of money, and also the pecuniary damage of the user can be reduced when the person except the user executes the price payment illegally.

Also, an electronic currency transmitting/receiving terminal system of the present invention, further comprises an admission information storing means for receiving admission information from a system, which transmits the admission information such as a time, a location, etc. required for calculation of the price, via the settling system communicating means to store, and then transmitting the admission information via the settling system communicating means in response to a request instructions issued from the system that pays the electronic currency.

According to this configuration, the present invention can be utilized in such an application mode that the price is changed according to the fare adjustment at the time of boarding/leaving and the utilizing time of the traffic facility such as the railcar, the bus, etc.

Also, an electronic currency transmitting/receiving method of the present invention, further comprises an admission information storing step of receiving admission information from a system, which transmits the admission information such as a time, a location, etc. required for calculation of the price, via the settling system communicating step to store, and then transmitting the admission information via the settling system communicating step in response to a request instructions issued from the system that pays the electronic currency.

According to this configuration, the present invention can be utilized in such an application mode that the price is changed according to the fare adjustment at the time of boarding/leaving and the utilizing time of the traffic facility such as the railcar, the bus, etc.

Also, an electronic currency transmitting/receiving program of the present invention, for causing the computer to further execute an admission information storing step of receiving admission information from a system, which transmits the admission information such as a time, a location, etc. required for calculation of the price, via the settling system communicating step to store, and then transmitting the admission information via the settling system communicating step in response to a request instructions issued from the system that pays the electronic currency.

According to this configuration, the present invention can be utilized in such an application mode that the price is changed according to the fare adjustment at the time of boarding/leaving and the utilizing time of the traffic facility such as the railcar, the bus, etc.

Also, an electronic currency transmitting/receiving program recording medium of the present invention, for recording the program that causes the computer to further execute an admission information storing step of receiving admission information from a system, which transmits the admission information such as a time, a location, etc. required for calculation of the price, via the settling system communicating step to store, and then transmitting the admission information via the settling system communicating step in response to a request instructions issued from the system that pays the electronic currency.

According to this configuration, the present invention can be utilized in such an application mode that the price is changed according to the fare adjustment at the time of boarding/leaving and the utilizing time of the traffic facility such as the railcar, the bus, etc.

Also, a price settling system of the present invention, further comprises an admission information receiving means for requesting and receiving admission information via the terminal communicating means; and a price calculating means for calculating a price based on the admission information obtained by the admission information receiving means, and then outputting the price to the payment requesting means.

According to this configuration, the present invention can be utilized in such an application mode that the price is changed according to the fare adjustment at the time of boarding/leaving and the utilizing time of the traffic facility such as the railcar, the bus, etc.

Also, a price settling method of the present invention, further comprises an admission information receiving step of requesting and receiving admission information via the terminal communicating step; and a price calculating step of calculating a price based on the admission information obtained by the admission information receiving step, and then outputting the price to the payment requesting step.

According to this configuration, the present invention can be utilized in such an application mode that the price is changed according to the fare adjustment at the time of boarding/leaving and the utilizing time of the traffic facility such as the railcar, the bus, etc.

Also, a price settling program of the present invention, for causing the computer to further execute an admission information receiving step of requesting and receiving admission information via the terminal communicating step; and a price calculating step of calculating a price based on the admission information obtained by the admission information receiving step, and then outputting the price to the payment requesting step.

According to this configuration, the present invention can be utilized in such an application mode that the price is changed according to the fare adjustment at the time of boarding/leaving and the utilizing time of the traffic facility such as the railcar, the bus, etc.

Also, a price settling program recording medium of the present invention, for recording the program that causes the computer to further execute an admission information receiving step of requesting and receiving admission information via the terminal communicating step; and a price calculating step of calculating a price based on the admission information obtained by the admission information receiving step, and then outputting the price to the payment requesting step.

According to this configuration, the present invention can be utilized in such an application mode that the price is changed according to the fare adjustment at the time of boarding/leaving and the utilizing time of the traffic facility such as the railcar, the bus, etc.

Also, an electronic currency transmitting/receiving settling system of the present invention, comprises the electronic currency transmitting/receiving terminal system set forth in claim 1, 9, 13 or 17; and the price settling system set forth in claim 5 or 21.

According to this configuration, the user authenticating step that is generated in every price paying process using the electronic currency can be omitted, and also the pecuniary damage of the user can be reduced when the person except the user executes the price payment illegally. Also, when a plurality of electronic currency transmitting/receiving terminal systems that must pay the price are present closely, the user of the terminal can check which terminal the communication with is being established by displaying such terminal, and also wrong execution of the price settlement can be prevented. In addition, although a limit is not imposed on an amount of the electronic currency that is purchased and accumulated in the terminal, the user authenticating step that is generated in every price paying process using the electronic currency can be omitted up to a certain amount of money, and also the pecuniary damage of the user can be reduced when the person except the user executes the price payment illegally. Further, the present invention can be utilized in such an application mode that the price is changed according to the fare adjustment at the time of boarding/leaving and the utilizing time of the traffic facility such as the railcar, the bus, etc.

### <Brief Description of the Drawings>

FIG.1 is a block configurative diagram of an electronic currency transmitting/receiving terminal system according to a first embodiment of the present invention.
FIG.2 is a flowchart of the electronic currency transmitting/receiving terminal system according to the first embodiment of the present invention.
FIG.3 is a communication sequence diagram between the electronic currency transmitting/receiving terminal system and a price settling system according to the first embodiment of the present invention.
FIG.4 is a block configurative diagram of a price settling system according to the first embodiment of the present invention.
FIG.5 is a flowchart of the price settling system according to the first embodiment of the present invention.
FIG.6 is a block configurative diagram of another price settling system according to the first embodiment of the present invention.
FIG.7 is a flowchart of another price settling system according to the first embodiment of the present invention.
FIG.8 is a block configurative diagram of another electronic currency transmitting/receiving terminal system according to the first embodiment of the present invention.
FIG.9 is a communication sequence diagram between the electronic currency transmitting/receiving terminal system and the price settling system according to the first embodiment of the present invention.
FIG.10 is a block configurative diagram of an electronic currency transmitting/receiving terminal system according to a second embodiment of the present invention.
FIG.11 is a flowchart of the electronic currency transmitting/receiving terminal system according to the second embodiment of the present invention.
FIG.12 is a block configurative diagram of an electronic currency transmitting/receiving terminal system according to a third embodiment of the present invention.
FIG.13 is a block configurative diagram of another electronic currency transmitting/receiving terminal system according to the third embodiment of the present invention.
FIG.14 is a flowchart of the electronic currency transmitting/receiving terminal system according to the third embodiment of the present invention.
FIG.15 is a block configurative diagram of a price settling system according to the third embodiment of the present invention.
FIG.16 is a flowchart of the price settling system according to the third embodiment of the present invention.
FIG.17 is a block configurative diagram of still another electronic currency transmitting/receiving terminal system according to the third embodiment of the present invention.
FIG.18 is a block configurative diagram of another price settling system according to the third embodiment of the present invention.
FIG.19 is a block configurative diagram of an electronic currency transmitting/receiving settling system according to the third embodiment of the present invention.
FIG.20 is a flowchart of the electronic currency transmitting/receiving settling system according to the third embodiment of the present invention.
FIG.21 is a cellular-phone utilizing fare settling system in the prior art.

In these Figures, a reference 1 is a main body of an electronic currency transmitting/receiving system, 4 is a public network communicating means, 5 is an electronic currency purchase authenticating means, 6 is an electronic currency purchasing means, 7 is a purchased amount-of-money limiting means, 8 is an electronic currency storing means, 9 is a price settling system, 10 is a settling system communicating means, 11 is a terminal identification information holding means, 14 is a terminal communicating means, 15 is a payment requesting means, 16 is an electronic currency accepting means, 20 is a terminal identification information displaying means, 21 is a terminal name assigning/holding means, 22 is a settled amount-of-money accumulating means, 23 is a settlement authenticating means, 24 is a payment-authentication requirement deciding means, 25 is an admission information storing means, 27 is an admission information receiving means, and 28 is a price calculating means.

### <Best Mode for Carrying Out the Invention>

Embodiments of the present invention will be explained with reference to the drawings hereinafter.

### (First Embodiment)

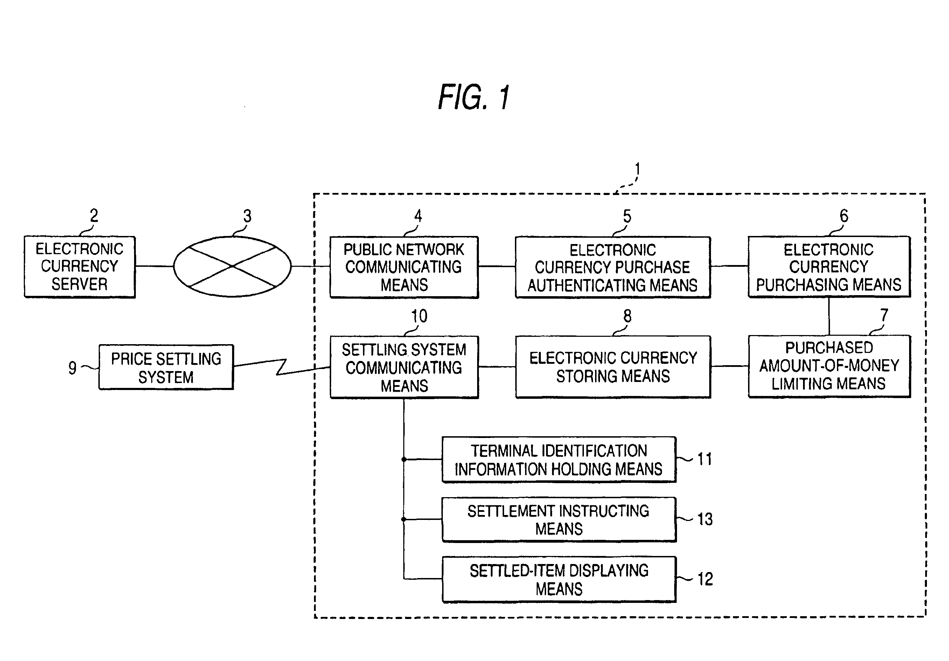

A block diagram of a first embodiment of the present invention is shown in FIG.1.

In FIG.1, to a main body of an electronic currency transmitting/receiving system 1 are connected a public network communicating means 4 for communicating with an electronic currency server 2, which issues an electronic currency, via a pubic network 3 such as the telephone line network, the Internet network, or the like; an electronic currency purchase authenticating means 5 for executing an authenticating process of the purchaser himself or herself by using a password, which consists of characters, numerals, and symbols, as well as the number of the bank account, the number of the credit card, etc. to identify/authenticate the purchaser of the electronic currency prior to the purchase of the electronic currency from the. electronic currency server 2 via the public network communicating means 4; an electronic currency purchasing means 6 for purchasing the electronic currency of the electronic currency purchaser, who has been identified by the electronic currency purchase authenticating means 5, from the electronic currency server 2 via the public network communicating means 4; a purchased amount-of-money limiting means 7 for limiting an amount of electronic currency, which can be purchased by the electronic currency purchasing means 6, under an upper limit amount of money that is set previously or that is set by the user; an electronic currency storing means 8 for storing the electronic currency that has been purchased by the electronic currency purchasing means 6; and a settling system communicating means 10 for executing a electronic currency paying process by a necessary amount of money via the communication with a price settling system 9, which executes a payment of the electronic currency by using the electronic currency stored in the electronic currency storing means 8. In addition, to the settling system communicating means 10 are also connected a. terminal identification information holding means 11 for storing information, e.g., the telephone number assigned to the settling system communicating means 10, to identify each electronic currency transmitting/receiving terminal system; a settled-item displaying means 12 for displaying an amount of the price, a product name, etc. that are transmitted from the price settling system 9; and a settlement instructing means 13 for issuing the instructions to transmit the electronic currency to the price settling. system 9 when it is decided based on the display that the amount of money, the product name, etc. are correct.

In this case, the terminal identification information holding means 11 may be constructed by the recording medium such as the semiconductor memory like SIM (Subscriber Identity Module), UIM (User Identity Module), etc., which can be detachably attached to the main body of the electronic currency transmitting/receiving system. Various phone numbers, names corresponding thereto, and electronic mail addresses as well as the identification information can be stored as a telephone directory function into this recording medium.

Also, if the encryption key and the electronic certificate being obtained via the public network 3 are stored in this recording medium and also the number of the credit card is stored in the main body of the electronic currency transmitting/receiving terminal system 1, it is possible to execute the price settlement between the price settling system 9 and such main body.

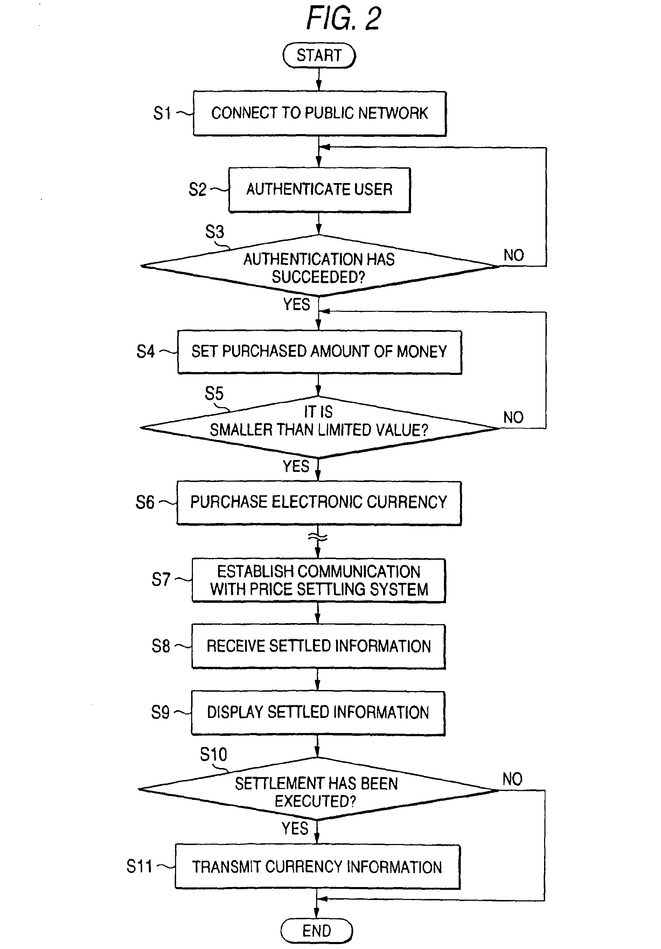

Next, an operation of the electronic currency transmitting/receiving terminal system constructed as above will be explained with reference to FIG.2 hereunder. First, since the electronic currency must be accepted previously into the terminal system, steps of such acceptance will be explained hereunder. The public network communicating means 4 is connected to the electronic currency server 2 via the public network 3 (step S1). In this case, the public network can be built up by the cable or radio telephone line network or the Internet network, and is not limited to the above. Then, the user authenticating process in the electronic currency server 2, which has already been connected via the public network 3, is executed by the electronic currency purchase authenticating means 5 (S2). This process is carried out by using the account number of the bank account, the number of the credit card, or the like and the corresponding password. In this case, in addition to the password, finger print, iris of the eye, voice print, image data of the face, genetic information, or the like may be employed in the user's authenticity. If the authenticating means 5 failed in its authentication (No in S3), the authentication information such as the password, or the like must be input once again to execute the authenticating process. If the authenticating means 5 succeeded in its authentication (Yes in S3), a desired amount of the electronic currency that is to be drawn from the electronic currency server 2 is set by the electronic currency purchasing means 6. Here, a limitation is imposed on an amount of purchased money by the purchased amount-of-money limiting means 7. In this case, an upper limit of the amount of purchased money may be previously set, otherwise the user may set arbitrarily such amount of purchased money. If such desired amount of purchased money to be drawn exceeds a limited value of the purchased amount of money (No in S5), an amount of purchased money must be set again. If such desired amount of purchased money is smaller than the limited value (Yes in S5), the electronic currency is purchased and such electronic currency is stored in the electronic currency storing means 8 (S6).

Next, an operation of the price settlement by using the purchased electronic currency will be explained hereunder.

First, the price settling system 9 and the settling system communicating means 10 are connected via the communication network (S7). More particularly, it is preferable that the Bluetooth (trade mark) as the communicating means that uses the weak radio wave, IrDA (Infra-red Data Association), IrFM (Infra-red Financial Messaging), and IrMC (Infra-red Mobil Communication) all are the infrared optical communication, SWAP (Shared Wireless Access Protocol) of Home RF, IEEE802.11, DSCR (Dedicated Short Range Communication), etc. should be employed as the communicating means. But the communicating means is not limited to them. Also, the communication network may be built up by using not only the radio communicating means but also the cable communicating means. An internal configuration and an operation of the price settling system 9 will be described later. When a price request signal (not only an amount of money but also additional information such as the commodity name, the quantity, etc. may be transmitted to include in the request signal) issued from the price settling system 9 is received by the settling system communicating means 10 (S8), the settled amount of money, the product name, etc. are displayed by the settled-item displaying means 12 (S9). Then, the user checks such displayed information to decide whether or not such settled amount of money can be settled by the settlement instructing means 13, i.e., the electronic currency should be transmitted to the price settling system 9 (S10). If the execution of the price settlement is instructed (Yes in S10), the electronic currency is taken out from the electronic currency storing means 8 by an amount of money that is requested by the price settling system 9, and then such electronic currency is transmitted to the price settling system 9 from the settling system communicating means 10 (S11). Then, a series of settling steps are ended.

In this case, the request signal containing not only an amount of money received by the settling system communicating means 10 but also the additional information such as the commodity name, the amount, etc. may be hold by a commerce-detail storing means (not shown) and stored as histories of revenue and expenditure of money. Also, these stored information may be transmitted to the external equipment by using the public network communicating means 4 or the settling system communicating means 10.

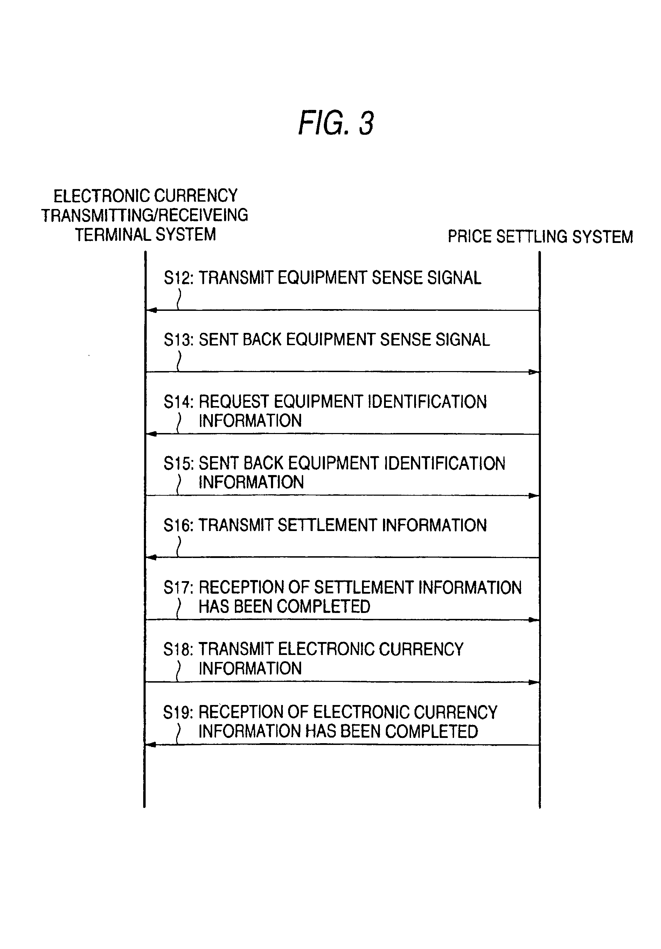

Then, an examination of the communication between the electronic currency transmitting/receiving terminal system 1 and the price settling system 9 will be explained with reference to FIG.3 hereunder. First, the electronic currency transmitting/receiving terminal system 1 comes close to the price settling system 9 (this means the AdHoc connection) or is connected to the price settling system 9 and then an equipment sense signal transmitted from the price settling system 9 (S12) is received. Then, an answer signal is transmitted in response to the equipment sense signal (S13). Then, an equipment identification information request signal is transmitted from the price settling system 9 (S14). Then, terminal identification information (for example, the telephone number, the IP (Internet protocol) address, the name of the equipment manufacturing company, the type name, the serial number, etc., but such information are not limited to above items) held in the terminal identification information holding means 11 are transmitted from the electronic currency transmitting/receiving terminal system 1 (S15).

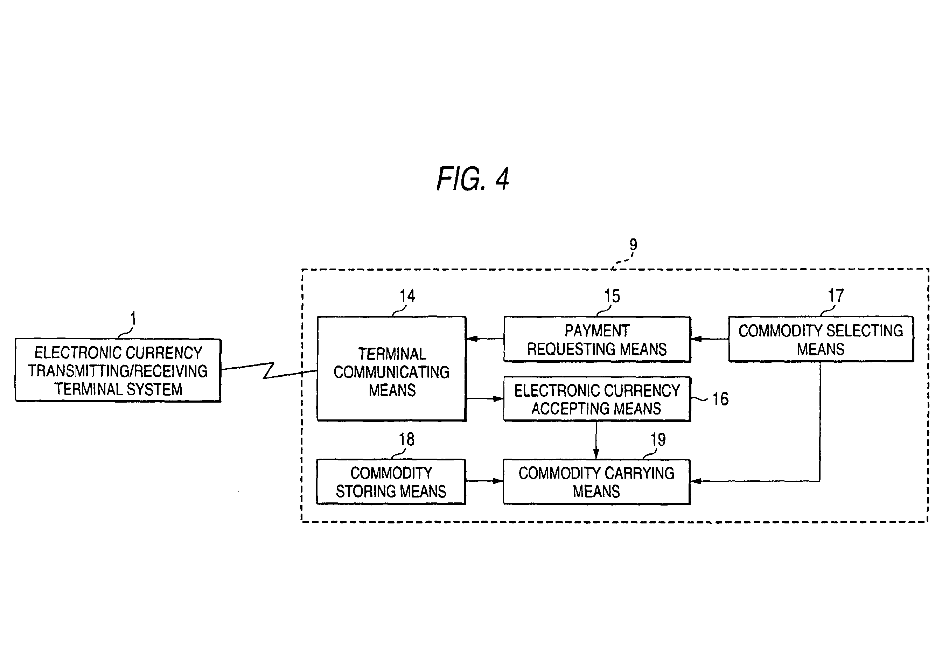

Then, settlement information as the price request signal is transmitted from the price settling system 9 (S16). Then, a signal indicating that reception of the settlement information has been completed is transmitted from the electronic currency transmitting/receiving terminal system 1 (S17). Then, when the settlement execution instructions is issued to the electronic currency transmitting/receiving terminal system 1, the electronic currency is transmitted to the price settling system 9 from the electronic currency transmitting/receiving terminal system 1 (S18). Then, when the electronic currency is received properly by the price settling system 9, a signal indicating that reception of the electronic currency information has been completed is transmitted (S19). Next, a block diagram of the price settling system 9 is shown in FIG.4.

In FIG.4, the price settling system 9 comprises a terminal communicating means 14 for executing the communication with the settling system communicating means 10 in the electronic currency transmitting/receiving terminal system 1; a payment requesting means 15 for transmitting the amount-of-money information of the necessary electronic currency to the settling system communicating means 10 via the terminal communicating means 14; and an electronic currency accepting means 16 for accepting the electronic currency transmitted from the electronic currency transmitting/receiving terminal system 1 via the terminal communicating means 14. In this case, the present embodiment is a vending machine, and a commodity selecting means 17 to which the commodity selecting instructions is issued by the user is connected to the payment requesting means 15, and a commodity carrying means 19 for carrying out the commodity from a commodity storing means 18, which stores the commodity, is connected to the commodity selecting means 17 and the electronic currency accepting means 16.

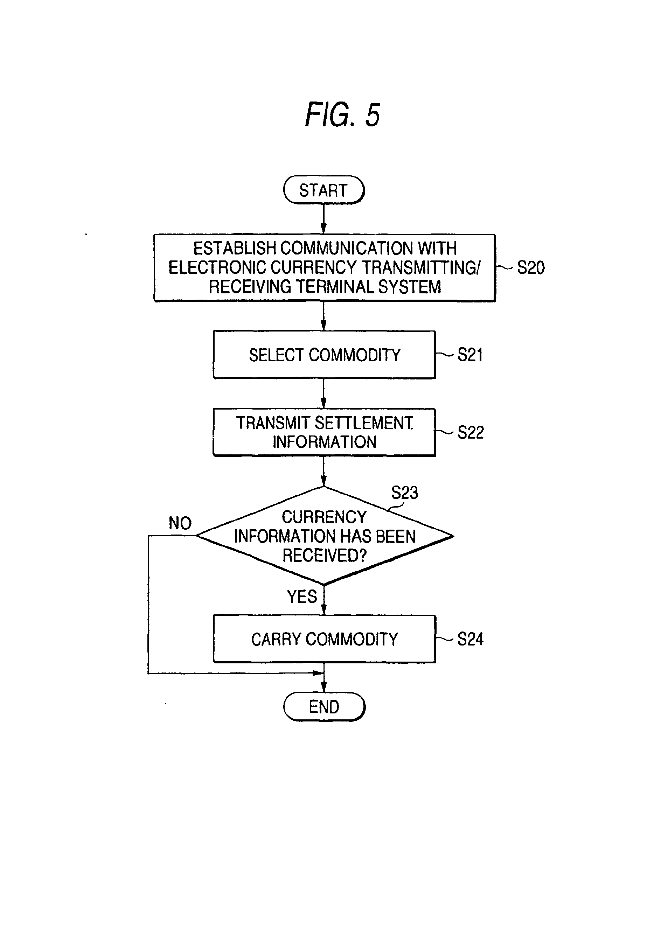

An operation of the price settling system constructed as above will be explained with reference to FIG.5 hereunder.

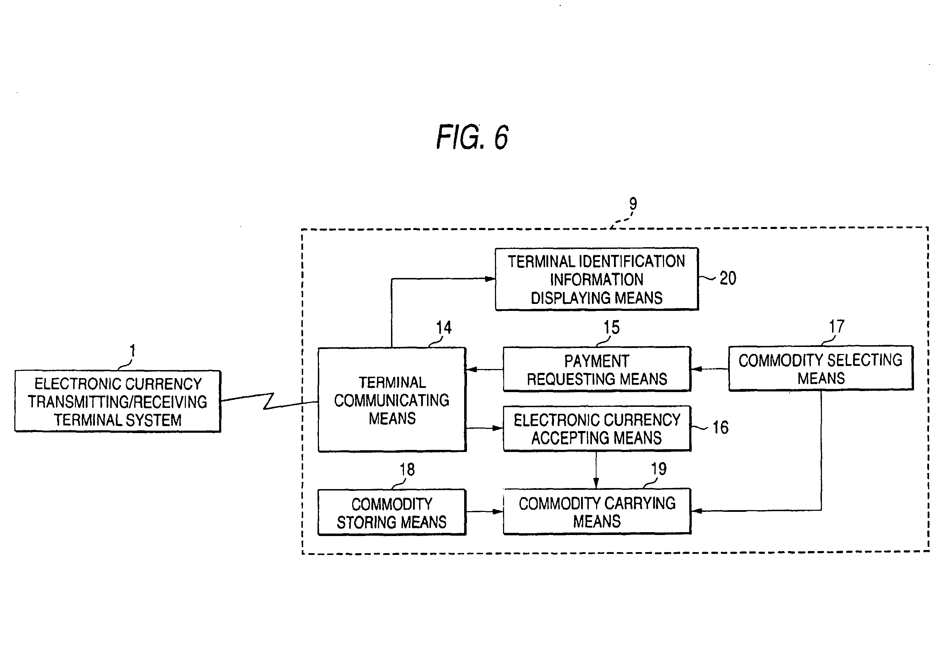

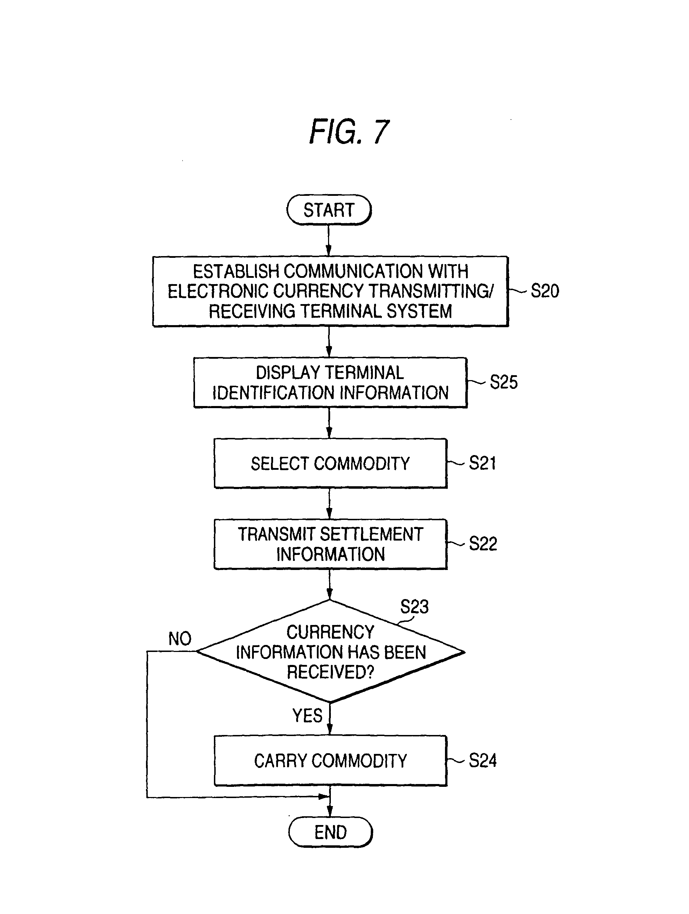

First, the communication is established between the settling system communicating means 10 in the electronic currency transmitting/receiving terminal system 1 and the terminal communicating means 14 in the price settling system 9 (S20). Then, the commodity is selected by the commodity selecting means 17 in response to the user's instructions (S21). Then, the payment requesting means 15 transmits the price of the commodity, the name, etc. via the terminal communicating means 14 (S22). Then, the electronic currency accepting means 16 checks whether or not the electronic currency that coincides with the price of the commodity has been received from the electronic currency transmitting/receiving terminal system 1 (S23). If the correct amount of money of the electronic currency is received (Yes in S23), the commodity selected by the commodity selecting means 17 is carried out of the commodities, which have been stored in the commodity storing means 18, by the commodity carrying means 19 (S24). In this case, as shown in a block diagram in FIG.6, a terminal identification information displaying means 20 may be connected to the terminal communicating means 14. Then, as shown in FIG.7, after the communication is established (S20), the terminal identification information held in the terminal identification information holding means 11 in the electronic currency transmitting/receiving terminal system 1 may be received via the terminal communicating means 14, and then such information may be displayed. If the identification information are the telephone number or the IP address, all displayed contents may be displayed or a part of the identification information such as only its lower four figures, or the like may be displayed.

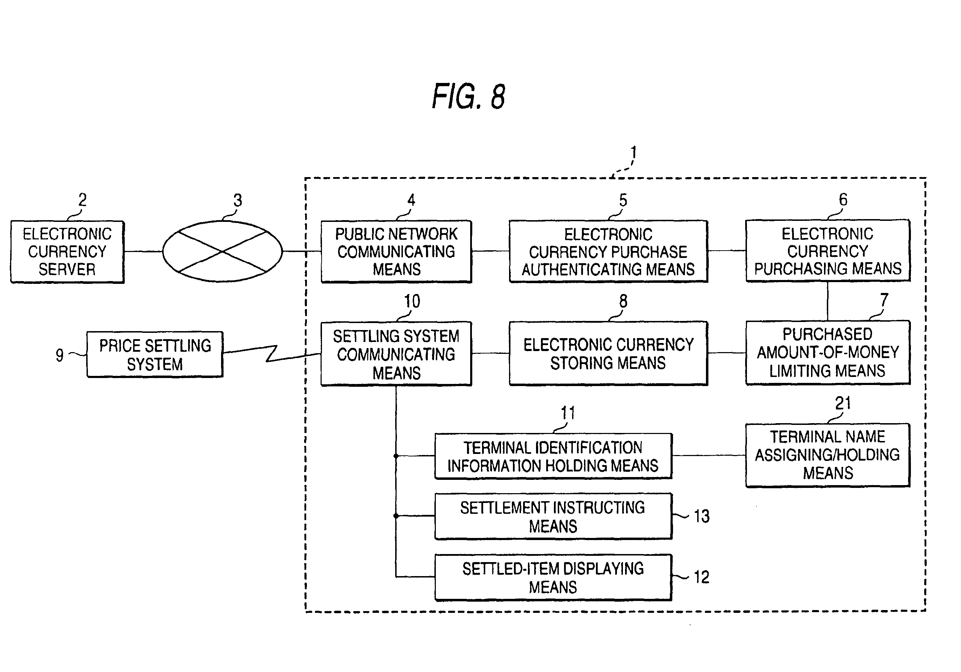

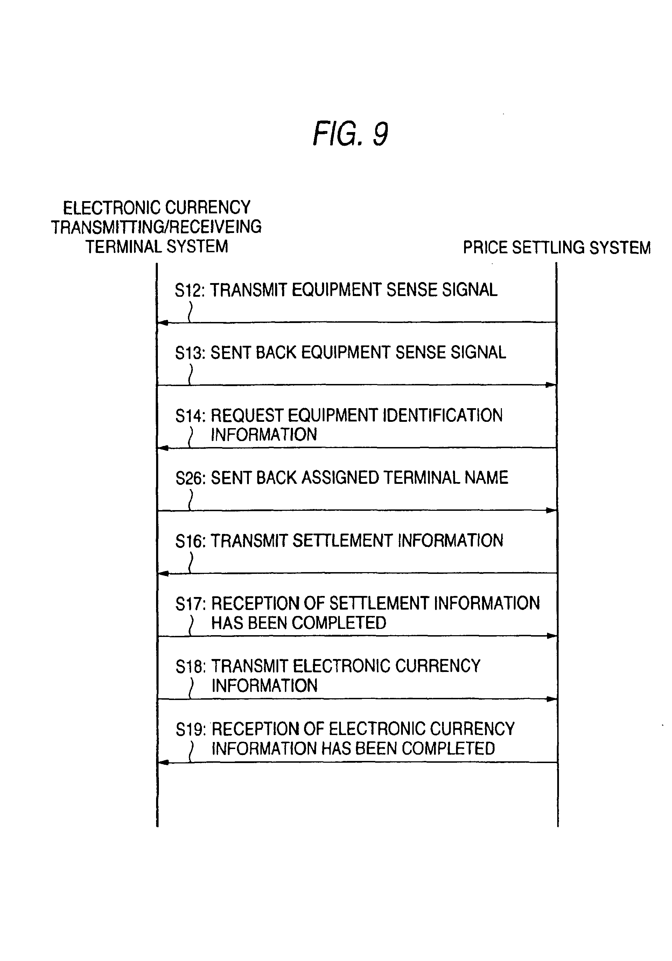

Also, as shown in a block diagram of FIG.8, a terminal name assigning/holding means 21 for assigning the user- intended terminal name to the terminal in place of the identification information held in the terminal identification information holding means 11 is added. Then, as shown in FIG.9, in place of S15 shown in FIG.3, the terminal name that may be assigned by the terminal name assigning/holding means 21 is sent back (S26), and then may be displayed by the terminal identification information displaying means 20. In this case, the assigned name is not limited to characters, numerals, and symbols. Such assigned name may be composed of icon, image, photograph, music/sound data, score data, etc.

Further, the embodiment of the above price settling system is explained while taking the vending machine as an example. In this case, the price settling system may be constructed as the electronic cash register. Then, the encryption key and the electronic certificate are obtained via the public network 3 and then stored in the recording medium provided to the main body of the electronic currency transmitting/receiving terminal system 1. Also, the number . of the credit card is stored in the main body of the electronic currency transmitting/receiving terminal system 1. Then, the price settlement can be attained by executing the hidden communication, via which the encrypted number of the credit card is transmitted, between the electronic currency transmitting/receiving terminal system 1 and the price settling system 9. In this case, the commodity selecting means 17, the commodity storing means 18, and the commodity carrying means 19 shown in FIG.4 are omitted, and details of. the price can be input by the payment requesting means 15. As operation steps, the user of the price settling system inputs sequentially the commodity name (commodity code), the quantity, and the unit cost by means of the button operation, the bar code input, or the like, then transmits the data such as the commodity name (commodity code), the quantity, the unit cost, a total sum of required prices, etc. to the electronic currency transmitting/ receiving terminal system 1 from the payment requesting means 15 via the terminal communicating means 14, and then executes the price settlement by the electronic currency accepting means 16.

Here, as the data that are transmitted to the electronic currency transmitting/receiving terminal system from the payment requesting means 15 via the terminal communicating means 14, information peculiar to the delivered commodity, e.g., seat reserving information, or available data/time information of the ticket, may be transmitted in addition to the commodity name (commodity code), the quantity, the unit cost, a total sum of required prices, etc.

According to the first embodiment of the present invention, the user's authenticating step that is generated in every paying process using the electronic currency can be omitted. Also, when the person except the owner of the terminal device executes the paying process illegally, the pecuniary damage of the user can be reduced.

In addition, in the situation that the electronic currency transmitting/receiving terminal system and the price settling system are connected via the radio communication, when a plurality of terminals are present in the neighborhood of the price settling system, the user of the terminal can check which terminal the price settling system is communicated with, and thus execution of the wrong price settlement can be prevented.

Further, according to such configuration, the identification information can be changed in response to the intension of the user. For example, when the telephone number, or the like is used as the identification information, such a situation can be prevented that such information is displayed on the price settling system and then is looked furtively by another person.

### (Second Embodiment)

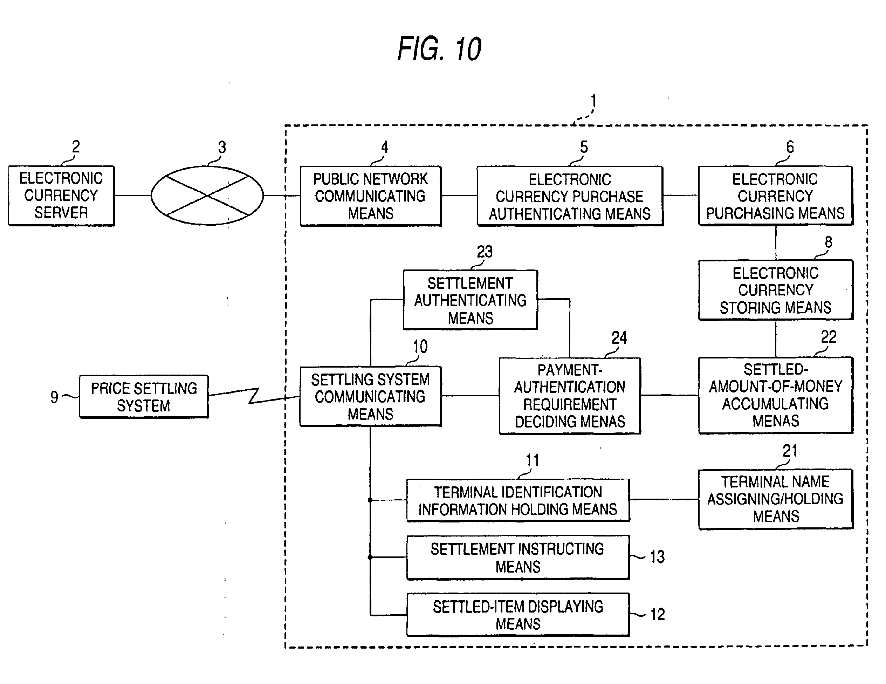

Next, a block diagram of a second embodiment of the present invention is shown in FIG.10. The same symbols are affixed to the same blocks as those explained in the first embodiment and operate similarly, and thus their explanation will be omitted herein.

In FIG.10, a settled amount-of-money accumulating means 22 for accumulating sequentially the settled amount of money every settlement in place of the purchased amount-of-money limiting means 7 in the first embodiment, a settlement authenticating means 23 for executing the user's authenticating process and then executing the paying process using the electronic currency by the settling system communicating means 10 when the electronic currency purchase authenticating means 5 succeeded in authentication, and a payment-authentication requirement deciding means 24 for comparing an upper limit amount of the payable amount of money that is set previously or set by the user with an amount of money stored in the settled amount-of-money accumulating means 22, and then executing the authentication process by the settlement authenticating means 23 and then executing the paying process of the electronic currency by the settling system communicating means 10 when the accumulated amount of paid money exceeds the upper limit amount or executing the paying process of the electronic currency by the settling system communicating means 10 not to execute the authentication process by the settlement authenticating means 23 when the accumulated amount of paid money does not exceed the upper limit amount are provided.

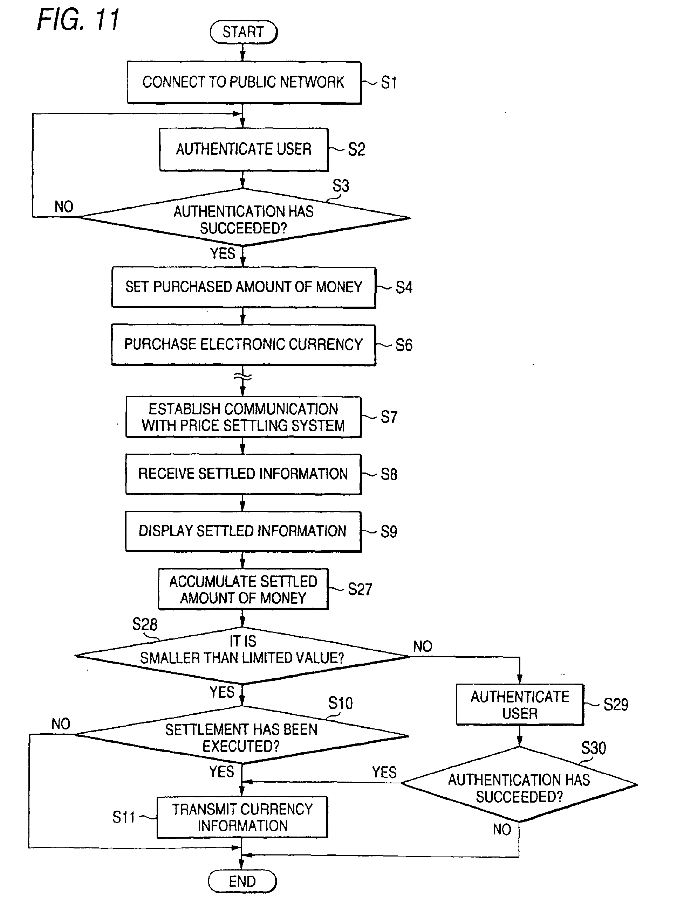

Next, an operation of the electronic currency transmitting/receiving terminal system constructed as above will be explained with reference to FIG.11 hereunder. The same symbols are affixed to the same steps as those explained in the first embodiment to execute the similar operation, and their explanation will be omitted herein. In the comparison with the first embodiment, S5 is eliminated and S9 et seq. are changed.

First, the information of the amount of money to be paid is received from the price settling system, and then the amount of money is accumulated in the settled amount-of-money accumulating means 22 (S27). Then, the upper limit amount of the payable money, which is set previously or is set by the user, and the amount of money stored in the settled amount-of-money accumulating means 22 are compared with each other in the payment-authentication requirement deciding means 24 (S28). Then, the accumulated amount of the money to be paid is in excess of the upper limit amount (No in S28), the authenticating process is executed by the settlement authenticating means 23 (S29), and then the electronic currency paying process is executed by the settling system communicating means 10 (S11). If such accumulated amount of the money to be paid is not in excess of the upper limit amount (Yes in S28), the electronic currency paying process is executed by the settling system communicating means 10 without the authenticating process executed by the settlement authenticating means 23.

According to such second embodiment of the present invention, although the limitation is not provided to the amount of the electronic currency, the user's authenticating step that is generated in every price paying process using the electronic currency can be omitted up to a certain amount of money. Also, when the person other than the user executes the paying process illegally, the pecuniary damage of the user can be reduced.

### (Third Embodiment)

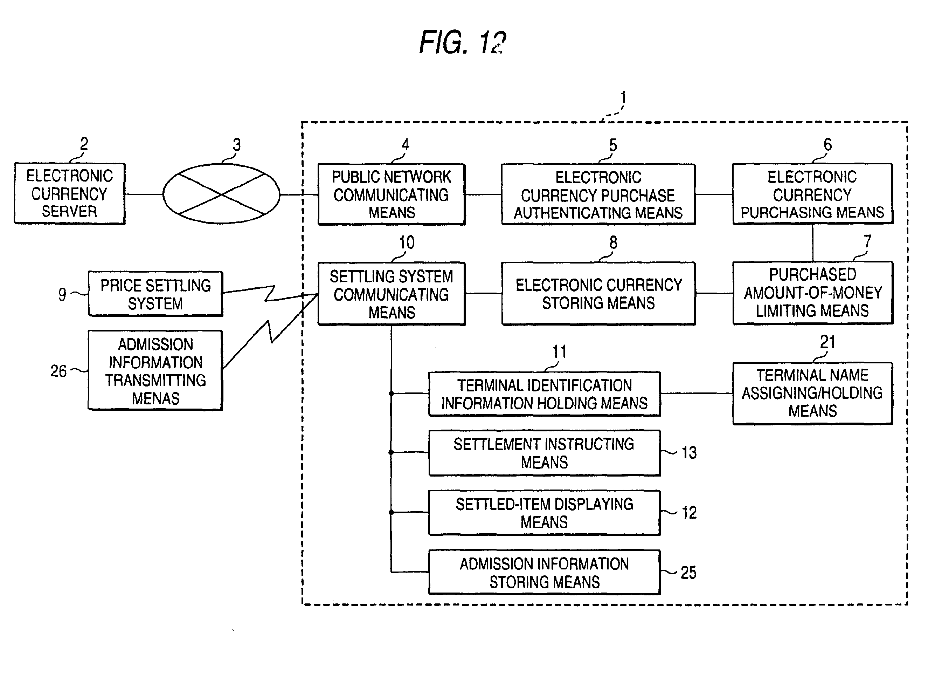

Next, a block diagram of a third embodiment of the present invention is shown in FIG.12. The same symbols are affixed to the same blocks as those explained in the first embodiment and the second embodiment and operate similarly, and thus their explanation will be omitted herein.

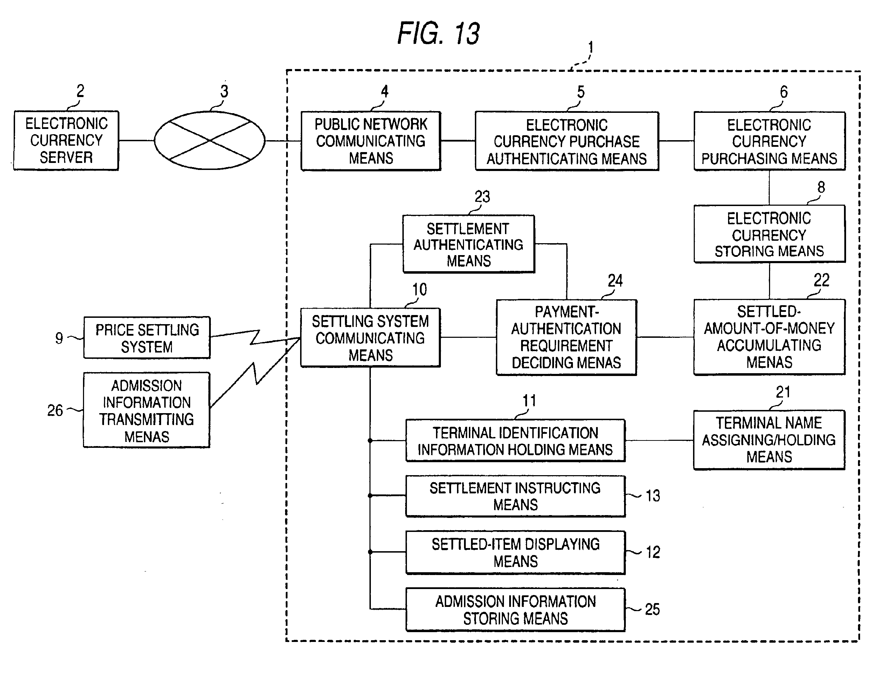

In FIG.12, an admission information storing means 25 receive the admission information supplied from an admission information transmitting means 26, which transmits admission information such as a time, a position, etc. that are necessary to count the price calculation, via the settling system communicating means 10 and stores such information therein. Then, the admission information storing means 25 transmits the admission information via the settling system communicating means 10 in response to the request instructions issued from the price settling system 9 that is used to pay the electronic currency. In FIG.13, a block diagram in which the admission information storing means 25 is applied to the electronic currency transmitting/receiving terminal system according to the second embodiment is shown.

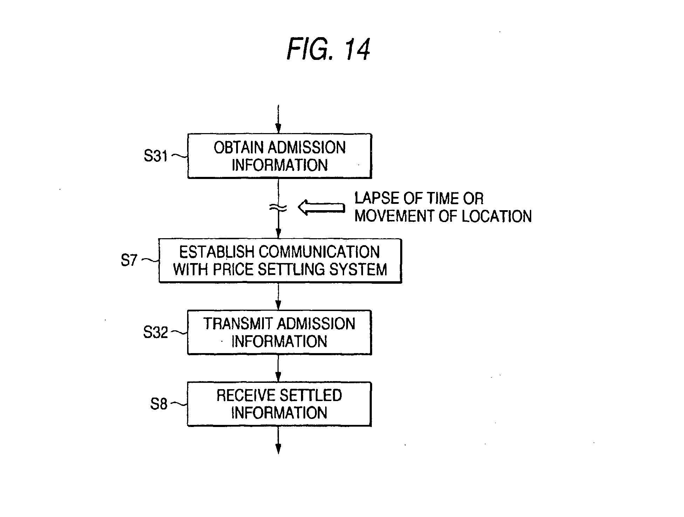

Next, an operation of the electronic currency transmitting/receiving terminal system constructed as above will be explained with reference to FIG.14 hereunder. The same symbols are affixed to the same steps as those explained in the first embodiment or the second embodiment to execute the similar operation, and their explanation will be omitted herein.

First, the admission information transmitting means 26 for transmitting the station name information or the time information to the electronic currency transmitting/ receiving terminal system 1 is provided to the ticket gate of the electric railcar or the entrance of the parking lot. Then, the admission information storing means 25 receives the admission information and then holds such information therein (S31). Then, the communication with the price settling system 9, which is provided to the ticket gate of the electric railcar or the exit of the parking lot, is established (S7). Then, the station name information or the time information, which is obtained at the ticket gate of the electric railcar or the entrance of the parking lot and then held in the admission information storing means 25, is transmitted to the price settling system 9 (S32).

Then, the settlement information as the price information calculated based on such information is received (S8). In the following, the price settlement is executed according to the steps explained as above.

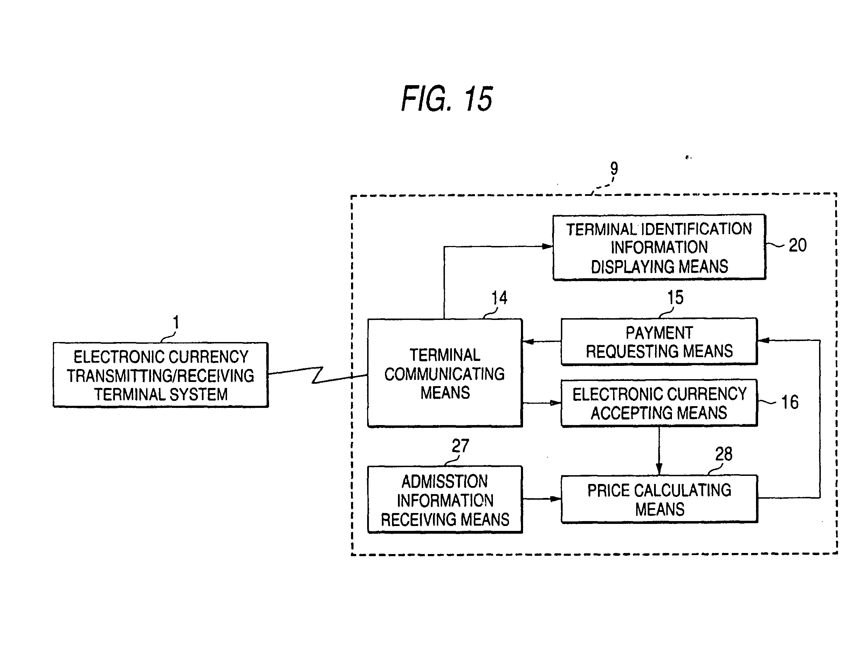

Next, the price settling system 9 will be explained with reference to a block diagram shown in FIG.15 hereunder.

An admission information receiving means 27 for requesting and receiving the admission information via the terminal communicating means 14, and an price calculating means 28 for calculating the price based on the admission information obtained by the admission information receiving means 27 and then outputting the price to the payment requesting means 15 are provided to the price settling system 9.

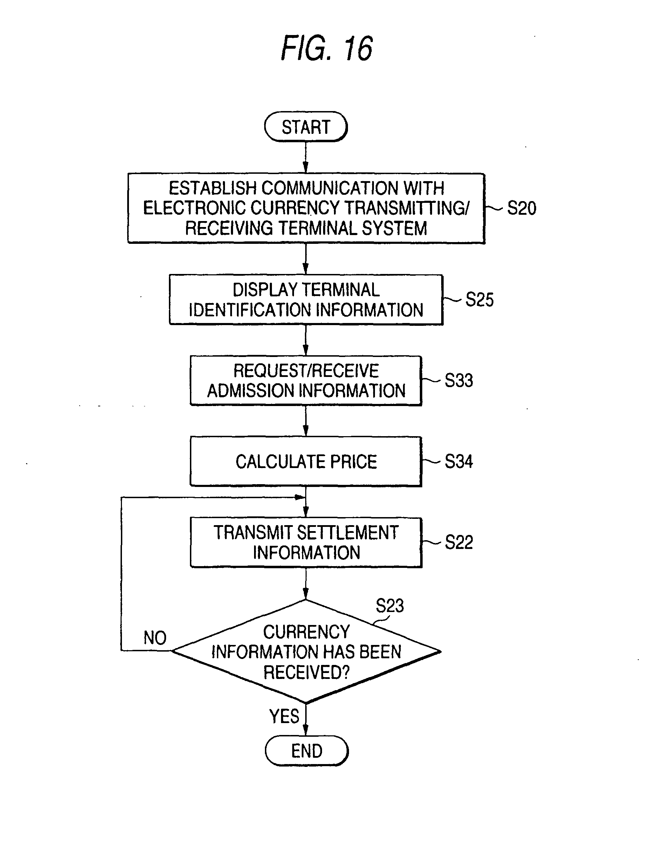

Then, an operation of the price settling system constructed as above will be explained with reference to FIG.16 hereunder. The same symbols are affixed to the same steps as those explained in the first embodiment or the second embodiment to execute the similar operation, and their explanation will be omitted herein.

First, the communication is established between the electronic currency transmitting/receiving terminal system 1 and the price settling system 9 (S20). Then, the terminal identification information are obtained and then displayed (S25). Then, the admission information receiving means 27 requests the admission information to send the electronic currency transmitting/receiving terminal system 1 via the terminal communicating means 14, and then receives such admission information (S33). Then, the price calculating means 28 calculates the price based on the obtained admission information, e.g., based on the railroad sections in the case of the traffic facilities, or calculates the price based on the time when the price is decided according to the time like the parking lot (S34). Then, the price is transmitted as the settlement information by the payment requesting means 15 (S22).

According to such third embodiment of the present invention, the present invention is available for such an application mode that the price is changed according to the fare adjustment at the time of boarding/leaving and the utilizing time of the traffic facility such as the railcar, the bus, etc.

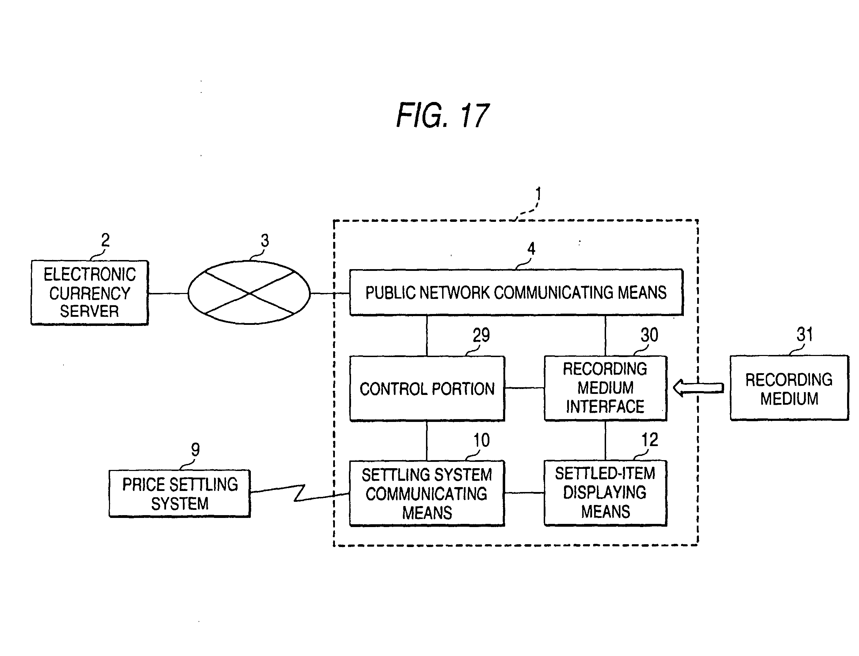

In this case, the program consisting respective steps explained in the first to third embodiments as steps can be delivered by transmitting via the telecommunication network such as the Internet, or the like or can be installed into the recording medium and then operated. FIG.17 is a block diagram of the electronic currency transmitting/receiving terminal system that is installed into the recording medium as the program to operate. The same symbols are affixed to the same blocks as those explained previously and operate similarly, and explanation of their operations will be omitted herein. First, a recording medium 31 on which the program is loaded is installed into a recording medium interface 30, which is provided to the electronic currency transmitting/receiving terminal system 1, in such a manner that such interface 30 can be connected to the recording medium 31 to read the program recorded on the recording medium 31. Then, the program read via the recording medium interface 30 is executed by a control portion 29, which consists of the electronic computer such as the microcomputer, or the like and necessary memory devices, to carry out respective steps explained above. As a result, the operation explained in the present embodiment can be executed.

Here, the recording medium is not restricted to one type. The magnetic recording disk, the magnet-optical recording disk (DVD, CD-ROM, etc.), the semiconductor memory device, etc. may be employed, but the recording medium is not restricted to them.

Also, if the program is installed into the main body of the electronic currency transmitting/receiving terminal system 1 via the telecommunication network, the above steps can be executed by providing a program storing means to the main body of the electronic currency transmitting/receiving terminal system 1, then executing the program by the control portion 29, and then controlling the public network communicating means 4.

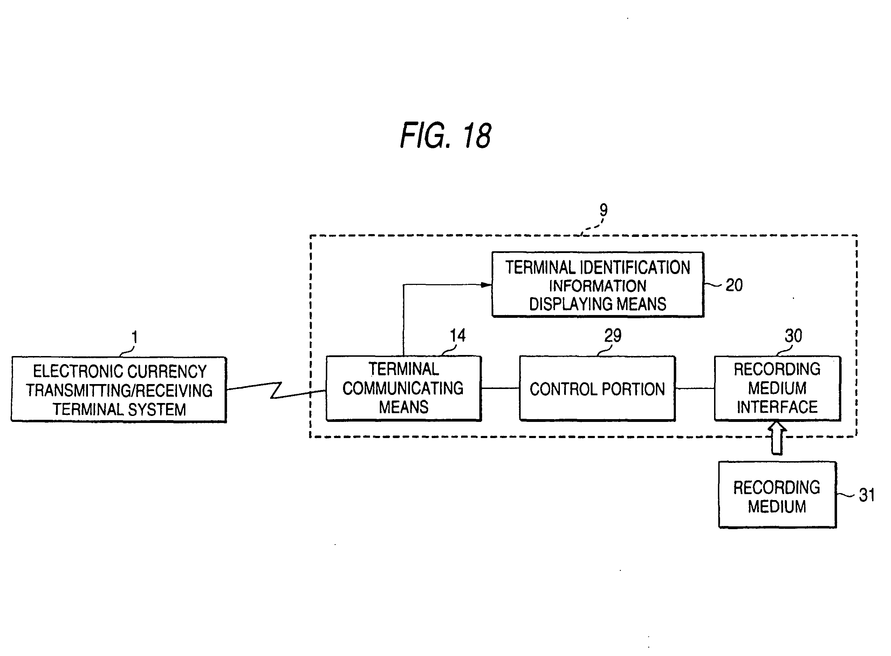

FIG.18 is a block diagram of the price settling system that is installed into the recording medium as the program to operate. The recording medium 31 on which the program is loaded is installed into the recording medium interface 30, which is provided to the electronic currency transmitting/receiving terminal system 1, in such a manner that such interface 30 can be connected to the recording medium 31 to read the program recorded on the recording medium 31. Then, the program read via the recording medium interface 30 is executed by the control portion 29, which consists of the electronic computer such as the microcomputer, or the like and necessary memory devices, to carry out respective steps explained above. As a result, the operation explained in the present embodiment can be executed.

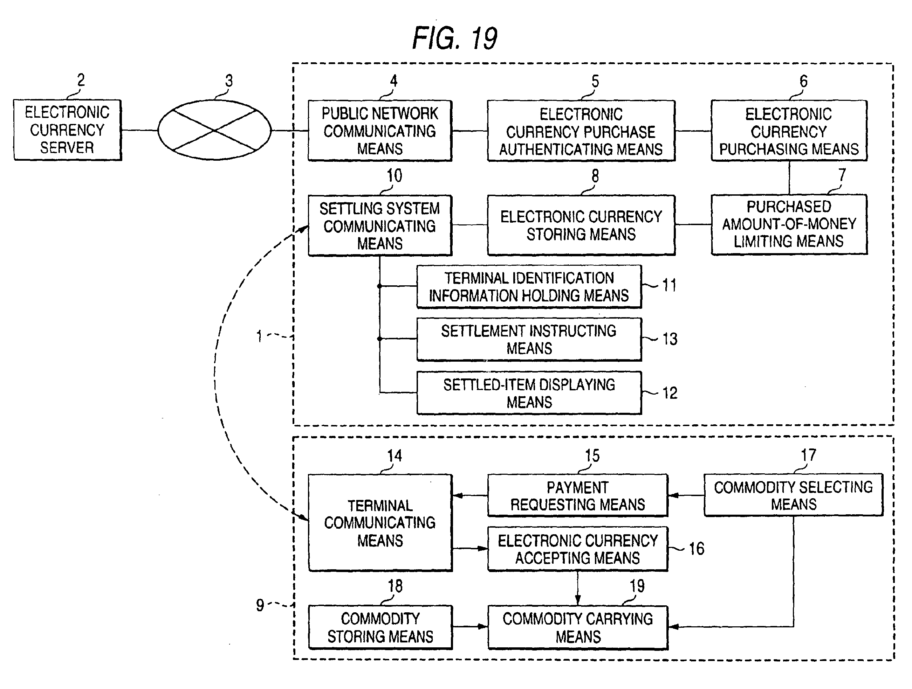

FIG.19 is a block diagram of an electronic currency transmitting/receiving settling system in which the electronic currency transmitting/receiving terminal system 1 and the price settling system 9 are used in combination as a system. In FIG.19, a combination of the electronic currency transmitting/receiving terminal system 1 explained in the first embodiment and the price settling system 9 is shown as an example. But the electronic currency transmitting/receiving settling system may be constructed as a system in which the electronic currency transmitting/ receiving terminal system 1 explained in the second or third embodiment and the price settling system 9 are combined with each other.

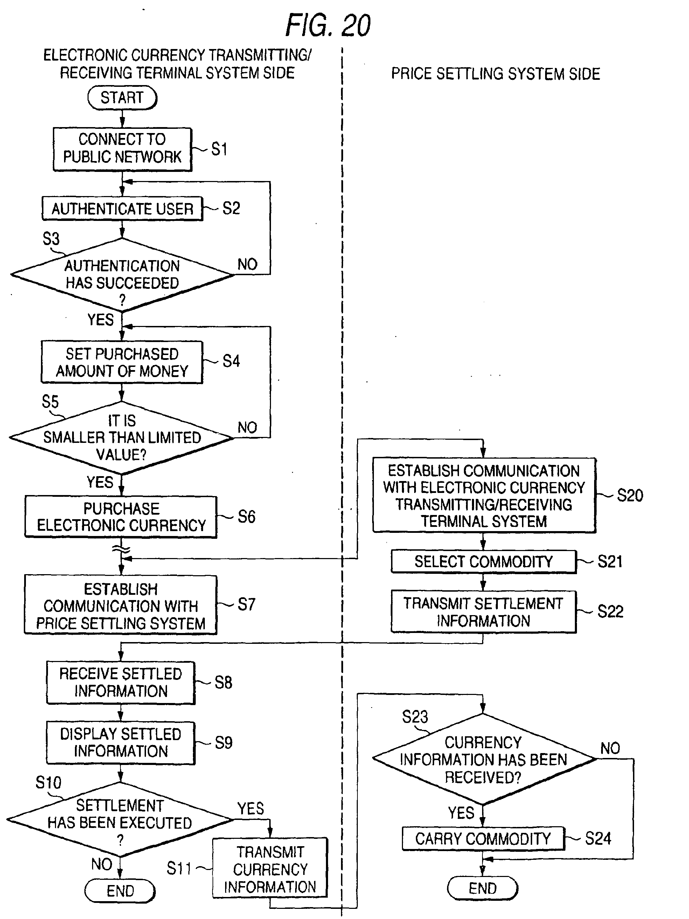

FIG.20 is a flowchart explaining an operation of the electronic currency transmitting/receiving settling system. The same symbols are affixed to the same steps as respective steps explained previously.
The present invention is explained in detail with reference to particular embodiments. But it is obvious for the person skilled in the art that various variations and modifications can be applied without departing from the spirit and the scope of the present invention.

The present application is filed based on Japanese Patent Application (Patent Application No.2001-131446) filed on April 27, 2001 and the contents are incorporated herein by the reference.

### <Industrial Applicability>

As described above, the present application can provide an electronic currency transmitting/receiving terminal system, an electronic currency transmitting/ receiving method, an electronic currency transmitting/ receiving program and a recording medium for the same, a price settling system, a price settling method, a price settling program and a recording medium for the same, and an electronic currency transmitting/receiving settling system, which can achieve advantages such that the terminal- user authenticating step, which is generated in every paying process using the electronic currency, can be omitted by providing a purchased amount-of-money limiting means that limits a purchased amount of electronic currency under an upper limit amount of money that is set previously, and also the pecuniary damage of the user can be reduced when the person except the terminal owner executes the paying process illegally.

## Claims

1. An electronic currency transmitting/receiving terminal system, comprising:
a public network communicating means for executing a communication with an electronic currency server that issues an electronic currency;
an electronic currency purchase authenticating means for executing an authenticating process of an electronic currency purchaser to the electronic currency server via the public network communicating means;
an electronic currency purchasing means for purchasing the electronic currency of the purchaser, who is authenticated by the electronic currency purchase authenticating means, from the electronic currency server via the public network communicating means;
a purchased amount-of-money limiting means for limiting an amount of the electronic currency, which is purchased by the electronic currency purchasing means, under a previously-set upper limit amount;
an electronic currency storing means for storing the electronic currency purchased by the electronic currency purchasing means; and
a settling system communicating means for executing a paying process by using the electronic currency, which is stored in the electronic currency storing means, via the communication with a system that pays the electronic currency.

2. An electronic currency transmitting/receiving method, comprising the steps of:
public network communicating for executing a communication with an electronic currency server that issues an electronic currency;
electronic currency purchase authenticating for executing an authenticating process of an electronic currency purchaser to the electronic currency server via the public network communicating step;
electronic currency purchasing for purchasing the electronic currency of the purchaser, who is authenticated by the electronic currency purchase authenticating step, from the electronic currency server via the public network communicating step;
purchased amount-of-money limiting for limiting an amount of the electronic currency, which is purchased by the electronic currency purchasing step, under a previously-set upper limit amount;
electronic currency storing for storing the electronic currency purchased by the electronic currency purchasing step; and
settling system communicating for executing a paying process by using the electronic currency, which is stored in the electronic currency storing step, via the communication with a system that pays the electronic currency.

3. An electronic currency transmitting/receiving program for causing a computer to execute,
a public network communicating step of executing a communication with an electronic currency server that issues an electronic currency;
an electronic currency purchase authenticating step of executing an authenticating process of an electronic currency purchaser to the electronic currency server via the public network communicating step;
an electronic currency purchasing step of purchasing the electronic currency of the purchaser, who is authenticated by the electronic currency purchase authenticating step, from the electronic currency server via the public network communicating step;
a purchased amount-of-money limiting step of limiting an amount of the electronic currency, which is purchased by the electronic currency purchasing step, under a previously-set upper limit amount;
an electronic currency storing step of storing the electronic currency purchased by the electronic currency purchasing step; and
a settling system communicating step of executing a paying process by using the electronic currency, which is stored in the electronic currency storing step, via the communication with a system that pays the electronic currency.

4. An electronic currency transmitting/receiving program recording medium for recording a program that causes a computer to execute,
a public network communicating step of executing a communication with an electronic currency server that issues an electronic currency;
an electronic currency purchase authenticating step of executing an authenticating process of an electronic currency purchaser to the electronic currency server via the public network communicating step;
an electronic currency purchasing step of purchasing the electronic currency of the purchaser, who is authenticated by the electronic currency purchase authenticating step, from the electronic currency server via the public network communicating step;
a purchased amount-of-money limiting step of limiting an amount of the electronic currency, which is purchased by the electronic currency purchasing step, under a previously-set upper limit amount;
an electronic currency storing step of storing the electronic currency purchased by the electronic currency purchasing step; and
a settling system communicating step of executing a paying process by using the electronic currency, which is stored in the electronic currency storing step, via the communication with a system that pays the electronic currency.

5. A price settling system, comprising:
a terminal communicating means for executing a communication with a settling system communicating means;
a terminal identification information displaying means for receiving identification information, which is held in the electronic currency transmitting/receiving terminal system and transmitted from the settling system communicating means, and displaying at least a part of the identification information;
a payment requesting means for causing the terminal communicating means to transmit an amount-of-money information of the electronic currency required for settlement to the settling system communicating means; and an electronic currency accepting means for accepting the electronic currency transmitted from the electronic currency transmitting/receiving terminal system via the terminal communicating means.

6. A price settling method, comprising:
a terminal communicating step of executing a communication with a settling system communicating step;
a terminal identification information displaying step of receiving identification information, which is held in the electronic currency transmitting/receiving terminal system and transmitted by the settling system communicating step, and displaying at least a part of the identification information;
a payment requesting step of causing the terminal communicating step to transmit an amount-of-money information of the electronic currency required for settlement to the settling system communicating step; and an electronic currency accepting step of accepting the electronic currency transmitted from the electronic currency transmitting/receiving terminal system via the terminal communicating step.

7. A price settling program for causing a computer to execute,
a terminal communicating step of executing a communication with a settling system communicating step;
a terminal identification information displaying step of receiving identification information, which is held in the electronic currency transmitting/receiving terminal system and transmitted by the settling system communicating step, and displaying at least a part of the identification information;
a payment requesting step of causing the terminal communicating step to transmit an amount-of-money information of the electronic currency required for settlement to the settling system communicating step; and
an electronic currency accepting step of accepting the electronic currency transmitted from the electronic currency transmitting/receiving terminal system via the terminal communicating step.

8. A price settling program recording medium for recording a program that causes a computer to execute,
a terminal communicating step of executing a communication with a settling system communicating step;
a terminal identification information displaying step of receiving identification information, which is held in the electronic currency transmitting/receiving terminal system and transmitted by the settling system communicating step, and displaying at least a part of the identification information;
a payment requesting step of causing the terminal communicating step to transmit an amount-of-money information of the electronic currency required for settlement to the settling system communicating step; and
an electronic currency accepting step of accepting the electronic currency transmitted from the electronic currency transmitting/receiving terminal system via the terminal communicating step.

9. An electronic currency transmitting/receiving terminal system, according to claim 1, further comprising:
a terminal name assigning/holding means for permitting a user to set the identification information, which is transmitted to a system that pays the electronic currency, of the electronic currency transmitting/ receiving terminal system.

10. An electronic currency transmitting/receiving method, according to claim 2, further comprising:
a terminal name assigning/holding step of permitting a user to set the identification information, which is transmitted to a system that pays the electronic currency, of the electronic currency transmitting/ receiving terminal system.

11. An electronic currency transmitting/receiving program, according to claim 3, for causing the computer to further execute,
a terminal name assigning/holding step of permitting a user to set the identification information, which is transmitted to a system that pays the electronic currency, of the electronic currency transmitting/ receiving terminal system.

12. An electronic currency transmitting/receiving program recording medium, according to Claim 4, for recording the program that causes the computer to further execute,
a terminal name assigning/holding step of permitting a user to set the identification information, which is transmitted to a system that pays the electronic currency, of the electronic currency transmitting/ receiving terminal system.

13. An electronic currency transmitting/receiving terminal system, comprising:
a public network communicating means for executing a communication with an electronic currency server that issues an electronic currency;
an electronic currency purchase authenticating means for executing an authenticating process of an electronic currency purchaser to the electronic currency server via the public network communicating means;
an electronic currency purchasing means for purchasing the electronic currency of the purchaser, who is authenticated by the electronic currency purchase authenticating means, from the electronic currency server via the public network communicating means;
a settled amount-of-money accumulating means for accumulating/storing an amount of the electronic currency that is paid by a settling process;
an electronic currency storing means for storing the electronic currency that is purchased by the electronic currency purchasing means;
a settling system communicating means for executing a paying process by using the electronic currency stored in the electronic currency storing means via the communication with a system that pays the electronic currency;
a settlement authenticating means for executing an authenticating process of the user and then causing the settling system communicating means to execute an electronic currency paying process when an authentication succeeded; and
a payment-authentication requirement deciding means for comparing an upper limit amount of a previously-set payable amount with an amount of money stored in the settled amount-of-money accumulating means, and then executing the authenticating process by the settlement authenticating means and then executing a paying process of the electronic currency by the settling system communicating means when an accumulated amount of the paid amount of money exceeds the upper limit amount, while executing the paying process of the electronic currency by the settling system communicating means without the authenticating process by the settlement authenticating means when the accumulated amount of the paid amount of money does not exceed the upper limit amount.

14. An electronic currency transmitting/receiving method, comprising:
a public network communicating step of executing a communication with an electronic currency server that issues an electronic currency;
an electronic currency purchase authenticating step of executing an authenticating process of an electronic currency purchaser to the electronic currency server via the public network communicating step;
an electronic currency purchasing step of purchasing the electronic currency of the purchaser, who is authenticated by the electronic currency purchase authenticating step, from the electronic currency server via the public network communicating step;
a settled amount-of-money accumulating step of accumulating/storing an amount of the electronic currency that is paid by a settling process;
an electronic currency storing step of storing the electronic currency that is purchased by the electronic currency purchasing step;
a settling system communicating step of executing a paying process by using the electronic currency stored by the electronic currency storing step via the communication with a system that pays the electronic currency;
a settlement authenticating step of executing an authenticating process of the user and then causing the settling system communicating step to execute an electronic currency paying process when an authentication succeeded; and
a payment-authentication requirement deciding step of comparing an upper limit amount of a previously-set payable amount with an amount of money stored by the settled amount-of-money accumulating step, and then executing the authenticating process by the settlement authenticating step and then executing a paying process of the electronic currency by the settling system communicating step when an accumulated amount of the paid amount of money exceeds the upper limit amount, while executing the paying process of the electronic currency by the settling system communicating step without the authenticating process by the settlement authenticating step when the accumulated amount of the paid amount of money does not exceed the upper limit amount.

15. An electronic currency transmitting/receiving program for causing a computer to execute,
a public network communicating step of executing a communication with an electronic currency server that issues an electronic currency;
an electronic currency purchase authenticating step of executing an authenticating process of an electronic currency purchaser to the electronic currency server via the public network communicating step;
an electronic currency purchasing step of purchasing the electronic currency of the purchaser, who is authenticated by the electronic currency purchase authenticating step, from the electronic currency server via the public network communicating step;
a settled amount-of-money accumulating step of accumulating/storing an amount of the electronic currency that is paid by a settling process;
an electronic currency storing step of storing the electronic currency that is purchased by the electronic currency purchasing step;
a settling system communicating step of executing a paying process by using the electronic currency stored in the electronic currency storing step via the communication with a system that pays the electronic currency;
a settlement authenticating step of executing an authenticating process of the user and then causing the settling system communicating step to execute an electronic currency paying process when an authentication succeeded; and
a payment-authentication requirement deciding step of comparing an upper limit amount of a previously-set payable amount with an amount of money stored in the settled amount-of-money accumulating means, and then executing the authenticating process by the settlement authenticating step and then executing a paying process of the electronic currency by the settling system communicating step when an accumulated amount of the paid amount of money exceeds the upper limit amount, while executing the paying process of the electronic currency by the settling system communicating step without the authenticating process by the settlement authenticating step when the accumulated amount of the paid amount of money does not exceed the upper limit amount.

16. An electronic currency transmitting/receiving program recording medium for recording a program that causes a computer to execute,
a public network communicating step of executing a communication with an electronic currency server that issues an electronic currency;
an electronic currency purchase authenticating step of executing an authenticating process of an electronic currency purchaser to the electronic currency server via the public network communicating step;
an electronic currency purchasing step of purchasing the electronic currency of the purchaser, who is authenticated by the electronic currency purchase authenticating step, from the electronic currency server via the public network communicating step;
a settled amount-of-money accumulating step of accumulating/storing an amount of the electronic currency that is paid by a settling process;
an electronic currency storing step of storing the electronic currency that is purchased by the electronic currency purchasing step;
a settling system communicating step of executing a paying process by using the electronic currency stored in the electronic currency storing step via the communication with a system that pays the electronic currency;
a settlement authenticating step of executing an authenticating process of the user and then causing the settling system communicating step to execute an electronic currency paying process when an authentication succeeded; and
a payment-authentication requirement deciding step of comparing an upper limit amount of a previously-set payable amount with an amount of money stored in the settled amount-of-money accumulating means, and then executing the authenticating process by the settlement authenticating step and then executing a paying process of the electronic currency by the settling system communicating step when an accumulated amount of the paid amount of money exceeds the upper limit amount, while executing the paying process of the electronic currency by the settling system communicating step without the authenticating process by the settlement authenticating step when the accumulated amount of the paid amount of money does not exceed the upper limit amount.

17. The electronic currency transmitting/receiving terminal system, according to Claim 1, 9 or 13, further comprising:
an admission information storing means for receiving admission information from a system, which transmits the admission information such as a time, a location, etc. required for calculation of the price, via the settling system communicating means to. store, and then transmitting the admission information via the settling system communicating means in response to a request instructions issued from the system that pays the electronic currency.

18. The electronic currency transmitting/receiving method, according to Claim 2, 10 or 14, further comprising:
an admission information storing step of receiving admission information from a system, which transmits the admission information such as a time, a location, etc. required for calculation of the price, via the settling system communicating step to store, and then transmitting the admission information via the settling system communicating step in response to a request instructions issued from the system that pays the electronic currency.

19. The electronic currency transmitting/receiving program, according to Claim 3, 11 or 15, for causing the computer to further execute,
an admission information storing step of receiving admission information from a system, which transmits the admission information such as a time, a location, etc. required for calculation of the price, via the settling system communicating step to store, and then transmitting the admission information via the settling system communicating step in response to a request instructions issued from the system that pays the electronic currency.

20. An electronic currency transmitting/receiving program recording medium, according to Claim 4, 12 or 16, for recording the program that causes the computer to further execute,
an admission information storing step of receiving admission information from a system, which transmits the admission information such as a time, a location, etc. required for calculation of the price, via the settling system communicating step to store, and then transmitting the admission information via the settling system communicating step in response to a request instructions issued from the system that pays the electronic currency.

21. A price settling system, according to Claim 5, further comprising:
an admission information receiving means for requesting and receiving admission information via the terminal communicating means; and
a price calculating means for calculating a price based on the admission information obtained by the admission information receiving means, and then outputting the price to the payment requesting means.

22. The price settling method, according to Claim 6, further comprising:
an admission information receiving step of requesting and receiving admission information via the terminal communicating step; and
a price calculating step of calculating a price based on the admission information obtained by the admission information receiving step, and then outputting the price to the payment requesting step

23. The price settling program, according to claim 7, for causing the computer to further execute,
an admission information receiving step of requesting and receiving admission information via the terminal communicating step; and
a price calculating step of calculating a price based on the admission information obtained by the admission information receiving step, and then outputting the price to the payment requesting step.

24. The price settling program recording medium, according to Claim 8, for recording the program that causes the computer to further execute,
an admission information receiving step of requesting and receiving admission information via the terminal communicating step; and
a price calculating step of calculating a price based on the admission information obtained by the admission information receiving step, and then outputting the price to the payment requesting step.

25. An electronic currency transmitting/receiving settling system, comprising:
the electronic currency transmitting/receiving terminal system set forth in claim 1, 9, 13 or 17; and
the price settling system set forth in claim 5 or 21.
